# EUROPÄISCHE PATENTANMELDUNG

(11) **EP 1 868 082 A1**
(43) Veröffentlichungstag der Anmeldung: **19.12.2007**
(21) Anmeldenummer: 06012060.7
(22) Anmeldetag: 12.06.2006
(51) Int. Cl.: G06F 9/44

(54) **Navigation zwischen Verwendungsstellen von Ressourcen in Automatisierungssystemen**

(71) Anmelder: SIEMENS AKTIENGESELLSCHAFT, 80333 München (DE)
(72) Erfinder: Biehler, Georg, 90453 Nürnberg (DE); Füsslein, Wolfgang, 76879 Essingen (DE); Trapp, Lothar, 90537 Feucht (DE)

(57) **Zusammenfassung**

Die Erfindung betrifft ein Verfahren bzw. ein System zur Nutzung von zumindest einer Ressource (3) eines ersten Automatisierungssystems (1) in zumindest einem zweiten Automatisierungssystem (2), wobei die Ressource (3) vom ersten Automatisierungssystem (1) zur Verfügung gestellt und zur eindeutigen Identifikation der Ressource (3) im zumindest zweiten Automatisierungssystem (2) ein Identifikationsmerkmal verwendet wird. Der Erfindurig liegt die Aufgabe zugrunde, einem Anwender auf einfache Weise zu ermöglichen, zwischen den Verwendungsstellen von Erzeuger und Verwender einer Ressource navigieren zu können. Diese Aufgabe wird im Wesentlichen dadurch gelöst, dass die Nutzung der Ressource (3) des ersten Automatisierungssystems (1) im zumindest zweiten Automatisierungssystem (2) als eine jeweils zweiseitige Referenz zwischen den Automatisierungssystemen (1,2) abgebildet und in den Automatisierungssystemen jeweils in einem Speicherbereich (5,6) abgelegt wird, wobei die zweiseitige Referenz auch Verwendungsstellen der Ressource im jeweiligen Automatisierungssystem enthält. Mit diesem Verfahren bzw. System kann eine schnelle Identifikation der beteiligten Kommunikationspartner einer Ressource angezeigt werden und dort die Deklarationsstelle bzw. die Verwendungsstelle dieser Ressource angezeigt werden.

## Beschreibung

Die Erfindung betrifft ein Verfahren bzw. ein System zur Nutzung von zumindest einer Ressource eines ersten Automatisierungssystems in zumindest einem zweiten Automatisierungssystem, wobei die Ressource vom ersten Automatisierungssystem zur Verfügung gestellt und zur eindeutigen Identifikation der Ressource im zumindest zweiten Automatisierungssystem ein Identifikationsmerkmal verwendet wird.

Ein derartiges Verfahren bzw. System kommt auf dem Gebiet der Anlagenautomatisierung zum Einsatz, auf dem zur Steuerung oder Aktualisierung einer Anlage meistens mehrere Automatisierungssysteme eingesetzt werden. Ein wichtiger Teilaspekt dabei ist die Nutzung von Variablen eines Automatisierungssystems in einem anderen Automatisierungssystem. Die Programmteile, die gegenseitig gemeinsame Ressourcen, wie zum Beispiel Variablen, nutzen, haben über diese gemeinsame Nutzung einen logischen Zusammenhang. Deswegen bedingen Änderungen an einer Stelle oft auch Änderungen an den anderen Stellen, zum Beispiel wenn die Bedeutung einer Variablen oder der Datentyp einer Variablen sich ändert. Der Anwender muss in vielen Fällen die Programmstellen von Erzeuger und Verwender einer Ressource anpassen können. Dazu muss er diese Programmstellen einfach auswählen können, ausgehend von einer Seite, zum Beispiel um die betreffenden Programmstellen zu finden, zu öffnen, anzuzeigen und verändern zu können. Da eine Ressource von mehreren Nutzern verwendet werden kann, müssen auch mehrere Verwender beherrscht werden. Diese benötigte Funktion entspricht einer Art "Cross-Referenz-Liste" für die automatisierungssystemübergreifende Verwendung von Ressourcen, mit Aufruf und/oder Anzeige der jeweiligen Programmteile. Die Anzeige und gegebenenfalls Änderung der Ressourcen erfolgt dabei gewöhnlich in einem mit den Automatisierungssystemen kommunikativ verbundenem Engineeringsystem.

Nach Stand der Technik können die Verwendungen von Variablen nur im Kontext eines Programms eines Automatisierungssystems über die Referenzliste angezeigt werden und über diese zur entsprechenden Definitionsstelle und allen Verwendungsstellen navigiert werden. Für die Verwendung einer Ressource in mehreren Automatisierungssystemen gibt es keine entsprechenden Lösungen.

Bei Verwendung der einseitigen programmierten Bausteinkommunikation, zum Beispiel mit PUT/GET oder READ/WRITE nach IEC 61131-5, muss der Anwender über die Eigenschaften der Verbindung zum Beispiel den Kommunikationspartner herausfinden. Dort muss er über die Adresse bzw. Namen die verwendete lokale Variable im dortigen Programm identifizieren und kann über die dortige lokale Referenzliste die Verwendungsstellen finden. Bei Verwendung der zweiseitigen programmierten Bausteinkommunikation, zum Beispiel mit USEND/URCV, muss der Anwender zuerst ebenfalls über die Eigenschaften der Verbindung zum Beispiel den Kommunikationspartner herausfinden. Dort muss er über die zur Verbindung gehörigen dortigen Verbindungsidentifier und den Parameter R_ID die korrespondierende Instanz finden. Dort steht die verwendete lokale Variable, und er kann über die dortige lokale Referenzliste die Verwendungsstellen finden.

Aufgabe der Erfindung ist es, ein einfaches Navigieren zwischen den Verwendungsstellen einer Ressource in verschiedenen Automatisierungssystemen zu ermöglichen.

Diese Aufgabe wird bei einem Verfahren bzw. einem System der eingangs genannten Art dadurch gelöst, dass die Nutzung der Ressource des ersten Automatisierungssystems im zumindest zweiten Automatisierungssystem als eine jeweils zweiseitige Referenz zwischen den Automatisierungssystemen abgebildet wird, wobei die zweiseitige Referenz auch Verwendungsstellen der Ressource im jeweiligen Automatisierungssystem enthält.

Die Abbildung der Nutzung einer Ressource in einem Objekt eines anderen Kommunikationspartners, das heißt anderen Automatisierungssystems, als zweiseitige Referenz zwischen diesen Objekten erfolgt systemgestützt und findet deshalb immer alle Verwendungsstellen. Eine große Fehlerquelle wird dadurch vermieden.

In einer vorteilhaften Ausführungsform ist das Identifikationsmerkmal hierarchisch aufgebaut und weist einen systemspezifischen Pfad und eine lokale Identifikation der Ressource auf. Der systemspezifische Pfad ist hierbei z.B. ein Pfadname, die lokale Identifikation z.B. ein Name der Ressource.

In einer weiteren vorteilhaften Ausführungsform wird die jeweils zweiseitige Referenz in den zumindest zwei Automatisierungssystemen jeweils in einem Speicherbereich abgelegt und ist somit in den Systemen vor Ort verfügbar.

In einer weiteren vorteilhaften Ausführungsform wird die jeweils zweiseitige Referenz auf einem Engineeringsystem in einem Speicherbereich abgelegt. Somit ist die zweiseitige Referenz in dem Engineeringsystem, über das gewöhnlich die Anzeige und gegebenenfalls Änderung der Ressourcen erfolgt und das mit den Automatisierungssystemen kommunikativ verbunden ist, direkt verfügbar.

In einer weiteren vorteilhaften Form der Ausführung können die Verwendungsstellen der zumindest einen Ressource des ersten Automatisierungssystems sowohl im ersten als auch im zumindest zweiten Automatisierungssystem über die jeweils zweiseitige Referenz mittels eines ersten Werkzeugs angezeigt werden. Die Übersicht über die Wirkung der einzelnen zusammenwirkenden Programmteile wird durch dieses Verfahren erleichtert und verbessert, da die Erzeuger/Nutzer-Beziehung dargestellt wird und Erzeugung und Nutzung in ihrem jeweiligen Kontext einfach angezeigt werden können.

In einer weiteren vorteilhaften Form der Ausführung können die Verwendungsstellen der zumindest einen Ressource mittels des ersten Werkzeugs in einem zweiten Werkzeug geöffnet werden. Dieses Verfahren eignet sich insbesondere für die Navigation zwischen einer von einem Automatisierungssystem zur Verfügung gestellten Variablen und ihren Verwendungsstellen und den korrespondierenden Instanzen in anderen Automatisierungssystemen bei der zweiseitigen programmierten Bausteinkommunikation. Bei der einseitigen programmierten Bausteinkommunikation kann zwischen der am Baustein angegebenen Variablenreferenz und der eigentlichen Variablen navigiert werden.

In einer weiteren vorteilhaften Form der Ausführung wird die Art des zweiten Werkzeugs durch die Verwendungsstelle bestimmt. Hiermit wird sichergestellt, dass das jeweilige Objekt mit dem für dieses Objekt passende Werkzeug, zum Beispiel dem passenden Programmierspracheneditor, geöffnet wird.

In einer weiteren vorteilhaften Form der Ausführung ist das zweite Werkzeug im ersten Werkzeug integriert. Aus diesen Eigenschaften und den oben genannten Vorteilen heraus ergibt sich ein erheblich geringerer Aufwand für den Anwender, sowie große Hilfe während des Programmtests und Inbetriebsetzung, die zu deutlicher Zeit- und Kostenersparnis führt.

In einer weiteren vorteilhaften Form der Ausführung werden das erste und das zweite Werkzeug mittels eines mit den Automatisierungssystemen kommunikativ verbundenen Engineeringsystems bedient. Ist dabei das zweite Werkzeug im ersten Werkzeug integriert, kann dies beispielsweise durch ein weiteres Fenster im Engineeringsystem realisiert sein.

Im Folgenden wird die Erfindung anhand des in der Figur dargestellten Ausführungsbeispiels näher beschrieben und erläutert. Es zeigt:

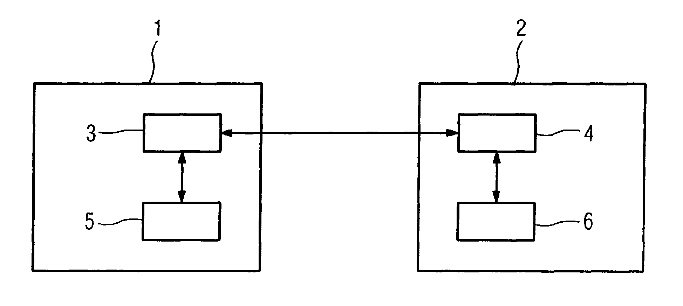

- FIG 1: eine schematische Darstellung zweier Automatisierungssysteme, die beide die gleiche Variable benutzen.

Die Figur zeigt ein erstes Automatisierungssystem 1, in dem eine Variable 3 definiert ist. Diese Variable 3 wird in einem zweiten Automatisierungssystem 2 genutzt, wofür eine Proxy-Variable 4 eingerichtet wird, damit das zweite Automatisierungssystem 2 nicht für jede Nutzung der Variable 3 auf das entfernte, erste Automatisierungssystem 1 zugreifen muss. Die Nutzung der Variablen 3 im zweiten Automatisierungssystem 2 wird mit ihrer genauen Verwendungsstelle als zweiseitige Referenz abgebildet. Diese zweiseitige Referenz wird in einem Speicherbereich 5, 6 sowohl im ersten als auch im zweiten Automatisierungssystem 1, 2 abgelegt. Somit sind in beiden Automatisierungssystemen 1, 2 die Verwendungsstellen sowohl der Variablen 3 als auch ihres Pendants, der Proxy-Variablen 4, im zweiten Automatisierungssystem 2 anzeigbar. Die Anzeige und gegebenenfalls Änderung der Variablen 3, 4 kann dabei auch in einem mit beiden Automatisierungssystemen 1, 2 kommunikativ verbundenem Engineeringsystem erfolgen, in der zusätzlich (oder in einer nicht der Figur entsprechenden Ausführungsform auch ausschließlich) die Ablage der zweiseitigen Referenz erfolgen kann.

Zusammenfassend betrifft die Erfindung ein Verfahren und ein System zur Nutzung von zumindest einer Ressource eines ersten Automatisierungssystems in zumindest einem zweiten Automatisierungssystem, wobei die Ressource vom ersten Automatisierungssystem zur Verfügung gestellt und zur eindeutigen Identifikation der Ressource im zumindest zweiten Automatisierungssystem ein Identifikationsmerkmal verwendet wird.

Der Erfindung liegt die Aufgabe zugrunde, einem Anwender auf einfache Weise zu ermöglichen, zwischen den Verwendungsstellen von Erzeuger und Verwender einer Ressource navigieren zu können. Diese Aufgabe wird im Wesentlichen dadurch gelöst, dass die Nutzung der Ressource des ersten Automatisierungssystems im zumindest zweiten Automatisierungssystem als eine jeweils zweiseitige Referenz zwischen den Automatisierungssystemen abgebildet und in den Automatisierungssystemen jeweils in einem Speicherbereich abgelegt wird, wobei die zweiseitige Referenz auch Verwendungsstellen der Ressource im jeweiligen Automatisierungssystem enthält. Mit diesem Verfahren bzw. System kann eine schnelle Identifikation der beteiligten Kommunikationspartner einer Ressource angezeigt werden und dort die Deklarationsstelle bzw. die Verwendungsstelle dieser Ressource angezeigt werden. Dieses Verfahren eignet sich insbesondere, um die Navigation zwischen einer zur Verfügung gestellten Variablen und ihren Verwendungsstellen und den korrespondierenden Instanzen bei der zweiseitigen programmierten Bausteinkommunikation zu unterstützen. Bei der einseitigen programmierten Bausteinkommunikation kann zwischen der am Baustein angegebenen Variablenreferenz und der eigentlichen Variablen navigiert werden. Diese Navigation erfolgt systemgestützt und findet immer alle Verwendungsstellen. Eine große Fehlerquelle wird dadurch vermieden.

## Patentansprüche

1. Verfahren zur Nutzung von zumindest einer Ressource (3) eines ersten Automatisierungssystems (1) in zumindest einem zweiten Automatisierungssystem (2), wobei die Ressource (3) vom ersten Automatisierungssystem (1) zur Verfügung gestellt und zur eindeutigen Identifikation der Ressource (3) im zumindest zweiten Automatisierungssystem (2) ein Identifikationsmerkmal verwendet wird,
**dadurch gekennzeichnet,**
**dass** die Nutzung der Ressource (3) des ersten Automatisierungssystems (1) im zumindest zweiten Automatisierungssystem (2) als eine jeweils zweiseitige Referenz zwischen den Automatisierungssystemen (1, 2) abgebildet wird, wobei die zweiseitige Referenz auch Verwendungsstellen der Ressource (3) im jeweiligen Automatisierungssystem (1, 2) enthält.

2. Verfahren nach Anspruch 1,
wobei das Identifikationsmerkmal hierarchisch aufgebaut ist und einen systemspezifischen Pfad und eine lokale Identifikation der Ressource (3) aufweist.

3. Verfahren nach Anspruch 1 oder 2,
wobei die jeweils zweiseitige Referenz in den zumindest zwei Automatisierungssystemen (1, 2) jeweils in einem Speicherbereich (5, 6) abgelegt wird.

4. Verfahren nach einem der vorhergehenden Ansprüche,
wobei die jeweils zweiseitige Referenz auf einem Engineeringsystem in einem Speicherbereich abgelegt wird.

5. Verfahren nach einem der vorhergehenden Ansprüche,
wobei die Verwendungsstellen der zumindest einen Ressource (3) des ersten Automatisierungssystems (1) sowohl im ersten (1) als auch im zumindest zweiten Automatisierungssystem (2) über die jeweils zweiseitige Referenz mittels eines ersten Werkzeugs angezeigt werden können.

6. Verfahren nach Anspruch 5,
wobei die Verwendungsstellen der zumindest einen Ressource (3) mittels des ersten Werkzeugs in einem zweiten Werkzeug geöffnet werden können.

7. Verfahren nach Anspruch 6,
wobei die Art des zweiten Werkzeugs durch die Verwendungsstelle bestimmt wird.

8. Verfahren nach Anspruch 6 oder 7,
wobei das zweite Werkzeug im ersten Werkzeug integriert ist.

9. Verfahren nach einem der Ansprüche 6 bis 8,
wobei das erste und das zweite Werkzeug mittels eines mit den Automatisierungssystemen kommunikativ verbundenen Engineeringsystems bedient werden.

10. System aus mindestens zwei Automatisierungssystemen (1, 2) mit Mitteln zur Nutzung von zumindest einer Ressource (3) eines ersten Automatisierungssystems (1) in zumindest einem zweiten Automatisierungssystem (2), wobei das erste Automatisierungssystem (1) Mittel zur Bereitstellung der Ressource (3) aufweist und zur eindeutigen Identifikation der Ressource (3) im zumindest zweiten Automatisierungssystem (2) ein Identifikationsmerkmal verwendbar ist,
**dadurch gekennzeichnet,**
**dass** die Nutzung der Ressource (3) des ersten Automatisierungssystems (1) im zumindest zweiten Automatisierungssystem (2) als eine jeweils zweiseitige Referenz zwischen den Automatisierungssystem (1, 2) abbildbar ist, wobei die zweiseitige Referenz auch Verwendungsstellen der Ressource (3) im jeweiligen Automatisierungssystem (1, 2) aufweist.

11. System nach Anspruch 10,
wobei das Identifikationsmerkmal einen hierarchischen Aufbau aus einem systemspezifischen Pfad und eine lokale Identifikation der Ressource (3) aufweist.

12. System nach Anspruch 10 oder 11,
wobei die jeweils zweiseitige Referenz in den zumindest zwei Automatisierungssystemen (1, 2) jeweils in einem Speicherbereich (5, 6) ablegbar ist.

13. System nach einem der Ansprüche 10 bis 12,
wobei die jeweils zweiseitige Referenz auf einem Engineeringsystem in einem Speicherbereich ablegbar ist.

14. System nach einem der Ansprüche 10 bis 13,
wobei das System ein erstes Werkzeug aufweist, mittels dem die Verwendungsstellen der zumindest einen Ressource (3) des ersten Automatisierungssystems (1) sowohl im ersten (1) als auch im zumindest zweiten Automatisierungssystem (2) über die jeweils zweiseitige Referenz anzeigbar sind.

15. System nach Anspruch 14,
wobei das System ein zweites Werkzeug zur Öffnung der Verwendungsstellen der zumindest einen Ressource (3) mittels des ersten Werkzeugs aufweist.

16. System nach Anspruch 15,
wobei die Art des zweiten Werkzeugs durch die Verwendungsstelle bestimmbar ist.

17. System nach Anspruch 15 oder 16,
wobei das zweite Werkzeug im ersten Werkzeug integrierbar ist.

18. System nach einem der Ansprüche 15 bis 17,
wobei das System ein mit den Automatisierungssystemen kommunikativ verbundenes Engineeringsystem aufweist, das zur Aufnahme und Bedienung des ersten und des zweiten Werkzeugs vorgesehen ist.
